# FASCICULE DE BREVET EUROPEEN

(11) **EP 1 566 687 B1**
(45) Date de publication et mention de la délivrance du brevet: **11.04.2007**
(21) Numéro de dépôt: 05001984.3
(22) Date de dépôt: 01.02.2005
(51) Int. Cl.: G02F 1/13357, G02B 6/00, G04G 1/00

(54) **Dispositif de rétro-éclairage pour élément d'affichage**
Hintergrundbeleuchtungsvorrichtung für Anzeigeelement
Backlight device for display element

(30) Priorité: 20.02.2004 EP 04003854
(43) Date de publication de la demande: 24.08.2005
(73) Titulaire: ETA SA Manufacture Horlogère Suisse, 2540 Grenchen (CH)
(72) Inventeur: Henriet, Fabien, 2852 Courtételle (CH); Klopfenstein, François, 2800 Delémont (CH)
(74) Mandataire: Laurent, Jean

(56) Documents cités:
- EP-A- 1 347 351
- US-A- 2 823 476
- US-A1- 2003 123 247

## Description

La présente invention concerne un dispositif de rétro-éclairage d'un élément d'affichage d'information d'un objet portable, tel qu'une montre-bracelet. Le dispositif de rétro-éclairage comprend une plaque guide de lumière ayant une face avant et une face arrière, un réflecteur de lumière placé sur la face arrière de la plaque guide de lumière, et une source de lumière visible. Cette source de lumière visible fournit en bordure de la plaque guide de lumière des rayons lumineux. Ces rayons lumineux se propagent dans la plaque guide de lumière entre ses deux faces afin d'être aiguillés pour illuminer l'écran d'affichage placé au-dessus de la face avant de la plaque guide de lumière. Le dispositif comprend également une couche placée du côté de la face avant de la plaque guide de lumière destinée à être en regard de l'élément d'affichage de l'objet portable. Cette couche a au moins une zone à opacité partielle décroissante à partir d'une limite située à proximité de l'endroit de la bordure de la plaque guide de lumière recevant les rayons lumineux de la source de lumière. Ceci permet d'atténuer l'intensité de la lumière traversant ladite zone.

Pour un objet, tel qu'une montre-bracelet, on entendra, par élément d'affichage, un cadran de montre, sur lequel des aiguilles indiquent l'heure, un écran d'affichage du type à cristaux liquides où des informations horaires ou textuelles ou imagées peuvent être affichées, ou une combinaison du cadran et de l'écran.

Des dispositifs d'illumination par l'arrière, qui sont dénommés dispositifs de rétro-éclairage, pour des écrans d'affichage notamment du type à cristaux liquides ont déjà été décrits dans l'art antérieur. On rencontre principalement de tels dispositifs dans des objets tels que des téléphones mobiles sans fil, des ordinateurs portables ou d'autres types d'objets portables d'usage courant.

Pour ces objets de relativement grande dimension, il est généralement facile d'illuminer par l'arrière de manière homogène un élément d'affichage sur toute sa surface visible. Pour ce faire, l'illumination par l'arrière est réalisée par une ou plusieurs sources de lumière disposées en regard de tranches d'une plaque guide de lumière. Ces sources de lumière fournissent des rayons lumineux dans la plaque guide de lumière afin que la lumière soit dirigée vers l'élément d'affichage. Avec plusieurs sources de lumière décalées d'une distance relativement importante par rapport à la partie visible de l'élément d'affichage, l'élément d'affichage peut être illuminé d'une manière relativement uniforme.

Dans le cas d'une montre-bracelet, il est difficile de prévoir plusieurs sources de lumière pour illuminer par l'arrière l'élément d'affichage étant donné que la place à disposition à l'intérieur du boîtier est restreinte. Comme le nombre de composants à monter dans ledit boîtier doit être réduit afin de remplir toutes les fonctions désirées de la montre, une seule source de lumière est généralement prévue pour assurer l'illumination de l'élément d'affichage.

Pour un dispositif de rétro-éclairage traditionnel, cette source de lumière est montée dans le boîtier de la montre en dessous de l'élément d'affichage dans une position proche de la partie visible de l'élément d'affichage. Même si la source de lumière est partiellement cachée en dessous de l'élément d'affichage, son rayonnement de lumière provoque un halo autour de la position de la source de lumière qui est visible de l'extérieur à travers l'élément d'affichage.

L'illumination par l'arrière de l'élément d'affichage n'est donc pas homogène étant donné que l'intensité de lumière de ce halo est plus importante que l'intensité de lumière illuminant le reste de l'élément d'affichage. Ceci est un inconvénient majeur d'un tel dispositif de rétro-éclairage s'il est prévu par exemple pour équiper une montre de haut de gamme.

Le document US 2,823,476 décrit un dispositif de rétro-éclairage d'un cadran de montre. Ce dispositif comprend une plaque guide de lumière au bord de laquelle est placée une source lumineuse pour propager des rayons lumineux dans la plaque entre une face arrière et une face avant de ladite plaque. Pour rendre homogène la luminosité du cadran de montre, un film de compensation est placé sur la face avant de la plaque guide de lumière. L'opacité de ce film de compensation est décroissante depuis le bord de la plaque recevant les rayons lumineux.

Pour réaliser ce film de compensation, il est nécessaire tout d'abord de répandre une émulsion photographique sur le film, de la placer sur le dispositif, d'enclencher la source de lumière, puis d'aller développer l'émulsion dans une chambre noire afin d'obtenir une zone à opacité décroissante. Toutes ces étapes sont relativement compliquées et onéreuses pour obtenir un tel film de compensation, ce qui est un inconvénient.

L'invention a donc pour but principal de pallier les inconvénients cités ci-dessus en fournissant un dispositif de rétro-éclairage d'un élément d'affichage d'information d'un objet portable qui permette de rendre uniforme l'illumination de l'élément d'affichage notamment dans une zone située autour de la source de lumière, et qui soit facile à réaliser.

A cet effet l'invention concerne un dispositif de rétro-éclairage d'un élément d'affichage d'information d'un objet portable, tel qu'une montre-bracelet cité ci-devant qui se caractérise en ce que la zone à opacité partielle est obtenue par une teinture en dégradé de couleur blanche ou argentée, qui est déposée sur la couche ou intégrée dans la couche, ou par un revêtement métallique semi-transparent d'épaisseur variable, ou par un revêtement métallique percé d'une multitude de trous de diamètre et espacement variables qui sont de taille inférieure à la résolution de l'oeil humain, ou par un revêtement métallique constitué d'une multitude de points métalliques de diamètre et espacement variables de manière que des rayons lumineux soient partiellement réfléchis et renvoyés dans la plaque guide de lumière pour réduire les pertes de photons utiles.

Un avantage du dispositif de rétro-éclairage, selon l'invention, réside dans le fait que le halo provoqué par une source de lumière située en dessous et à proximité de la partie visible de l'élément d'affichage est atténué par la zone à opacité décroissante obtenue par une telle teinture ou un tel revêtement. De cette manière, il est possible d'illuminer grâce à cette zone à opacité décroissante de manière homogène l'élément d'affichage de l'objet portable qui peut dépendre également de l'angle de vision de l'élément d'affichage. Une seule source de lumière peut ainsi suffire pour l'illumination de l'élément d'affichage. Cette source de lumière peut être une diode électroluminescente qui est montée sur une plaque à circuit imprimé et est placée dans un compartiment ouvert vers le haut d'une entretoise montée sur la plaque à circuit imprimé.

Bien entendu comme l'intensité de lumière de ce halo décroît en s'éloignant de la source de lumière jusqu'à une distance déterminée de ladite source, l'opacité partielle de la zone de la couche doit également décroître en s'éloignant de ladite source. Cette décroissance de l'opacité de la zone, qui s'étend jusqu'à une distance déterminée sur la couche, peut être non linéaire étant donné que la décroissance de l'intensité du halo en fonction de la distance est également non linéaire.

De préférence, la zone à opacité partielle est obtenue par une teinture déposée ou intégrée dans la couche, ou par un offset, ou par un revêtement métallique semi-transparent d'épaisseur variable, ou par un revêtement métallique percé d'une multitude de trous ou constitué de points métalliques de diamètre et espacement variables en fonction de la résolution de l'oeil humain. La teinture utilisée peut être un dégradé de couleur noire ou blanche ou argentée. Cette teinture est par exemple de l'encre déposée par une machine d'impression. La couleur blanche peut être utilisée avantageusement dans le cas où la couche à zone à opacité partielle fait partie intégrante de la face avant de la plaque guide de lumière pour une réflexion diffuse d'une partie de la lumière à redistribuer dans la plaque guide de lumière.

La couche à zone à opacité partielle peut également être un film diffuseur ou un film redresseur de la lumière placé sur la face avant de la plaque guide de lumière.

Avantageusement, la plaque guide de lumière comprend à sa périphérie un coin arrondi recouvert par une couche de réflexion de la lumière, qui peut être une peinture blanche entièrement opaque ou un revêtement métallique. La diode électroluminescente est ainsi disposée sous le coin arrondi afin de fournir des rayons lumineux dans une direction verticale. De cette façon, les rayons sont réfléchis par la couche de réflexion en bordure de la plaque guide de lumière pour se propager dans la plaque guide de lumière entre les faces avant et arrière.

Un joint en matériau silicone peut relier également la partie supérieure de la diode électroluminescente à une surface inférieure du coin arrondi de la plaque à circuit imprimé afin de limiter les pertes optiques. Ce joint est choisi pour avoir un indice de réfraction intermédiaire entre l'indice de réfraction du matériau transparent de la diode électroluminescente et l'indice de réfraction de la plaque guide de lumière.

Les buts, avantages et caractéristiques du dispositif de rétro-éclairage d'un élément d'affichage d'information d'un objet portable apparaîtront mieux dans la description suivante d'au moins un mode de réalisation de l'invention en liaison avec les dessins dans lesquels :
- la figure 1 représente une vue tridimensionnelle en éclaté du dispositif de rétro-éclairage selon l'invention,
- les figures 2a et 2b représentent une vue de dessus et une vue tridimensionnelle du dispositif de rétro-éclairage selon l'invention avec tous les éléments assemblés,
- les figures 3a et 3b représentent une vue de dessus de deux variantes de réalisation du film diffuseur du dispositif de rétro-éclairage selon l'invention,
- la figure 4 représente une vue en coupe schématique partielle d'un premier mode de réalisation du dispositif de rétro-éclairage selon l'invention au niveau de la source lumineuse,
- la figure 5 représente une vue en coupe schématique partielle d'un second mode de réalisation du dispositif de rétro-éclairage selon l'invention au niveau de la source lumineuse, et
- la figure 6 représente de manière simplifiée un graphique de l'intensité lumineuse de la lumière sortant du dispositif de rétro-éclairage sans atténuation et avec atténuation de l'intensité en fonction de la distance à la source de lumière.

Dans la description suivante, tous les éléments du dispositif de rétro-éclairage qui sont bien connus d'un homme du métier dans ce domaine technique, ne seront pas expliqués en détail. Le mode de réalisation décrit concerne spécifiquement un dispositif de rétro-éclairage d'un élément d'affichage d'information d'une montre-bracelet. Cet élément d'affichage peut être un écran à cristaux liquides du type transflectif ou un cadran de montre ayant des parties transparentes à la lumière visible.

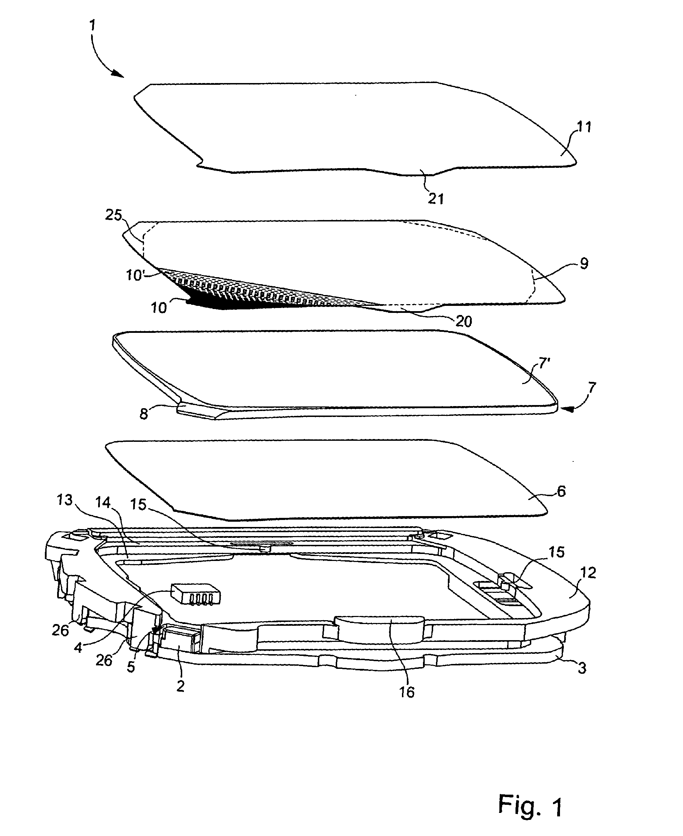

La figure 1 représente une vue tridimensionnelle en éclaté d'une forme d'exécution du dispositif de rétro-éclairage 1 équipant une montre bracelet. Dans cette forme d'exécution, le dispositif de rétro-éclairage 1 d'un élément d'affichage d'information non représenté comprend tout d'abord une plaque à circuit imprimé 3 sur laquelle sont fixés une source de lumière, telle qu'une diode électroluminescente 2 à éclairage vertical, et au moins un composant électronique 4. La diode électroluminescente est alimentée par une source d'énergie non représentée, telle qu'une pile ou un accumulateur, qui est électriquement reliée à la plaque à circuit imprimé 3.

Une entretoise 12 en forme de cadre en matériau plastique de préférence de couleur noire, voire blanche, est montée de manière amovible sur la plaque à circuit imprimé. Cette entretoise est positionnée grâce à des moyens d'assemblage constitués par des pieds 26 en contact avec la tranche de la plaque à circuit imprimé 3. Un compartiment 5 sur la partie extérieure de l'entretoise est prévu pour loger la diode électroluminescente. Ce compartiment comprend un certain nombre de parois verticales entourant partiellement ladite diode 2.

Bien entendu, ce compartiment pourrait être prévu également avec des parois verticales entourant complètement la diode électroluminescente pour lui permettre de ne fournir des rayons lumineux que dans une direction verticale. Un cadre opaque non représenté pourrait encore être inséré entre les parois du compartiment et la diode électroluminescente.

Le dispositif de rétro-éclairage 1 d'un élément d'affichage comprend encore une plaque guide de lumière 7, un réflecteur de lumière 6 du type diffus ou miroir monté sur la face arrière de la plaque guide de lumière, et une couche ayant une zone à opacité partielle 10' disposée entre la face avant de la plaque guide de lumière et l'élément d'affichage. Une structure à lentilles 7', qui peuvent être par exemple de taille nanométrique ou autre, est réalisée sur une partie de la face avant de la plaque guide de lumière 7. Cette structure à lentilles pourrait également être réalisée sur une partie de la face arrière de la plaque guide de lumière 7.

La plaque guide de lumière 7 comprend également un coin arrondi 8 qui est revêtu d'une peinture blanche opaque ou d'un revêtement métallique. La diode électroluminescente 2 dans son compartiment 5 est disposée juste en dessous du coin arrondi en bordure de la plaque guide de lumière. La diode électroluminescente fournit des rayons lumineux dans une direction verticale en direction du coin arrondi afin que ces rayons soient réfléchis de manière diffuse par la peinture blanche ou comme dans un miroir par le revêtement métallique. Après réflexion dans le coin arrondi, les rayons lumineux se propagent entre les faces avant et arrière de la plaque guide de lumière afin d'être réfléchis par le réflecteur et déviés par la structure de lentilles nanométriques.

La plaque guide de lumière 7 avec sa structure à lentilles nanométriques peut être réalisée en PC (poly-carbonate) ou en PMMA (poly-méthyle méthacrylate).

Dans cette forme d'exécution, la couche à zone à opacité partielle est un film flexible diffuseur de lumière 9 sur lequel peut être monté un film flexible redresseur de lumière 11. Ce film flexible redresseur de lumière 11 peut être un film T-BEF 90/24 fabriqué par l'entreprise 3M. Ce film redresseur est composé de micro-prismes sur sa face avant ou arrière pour redresser et orienter la lumière vers l'élément d'affichage. De préférence, des lignes de micro-prismes peuvent être disposées perpendiculairement par rapport à l'axe de propagation de la lumière dans la plaque guide de lumière pour mieux redresser la lumière et maximiser son intensité. Deux films redresseurs à lignes de prismes croisées pourraient également être utilisés pour maximiser l'intensité de la lumière dans un angle de vision prédéfini de l'élément d'affichage.

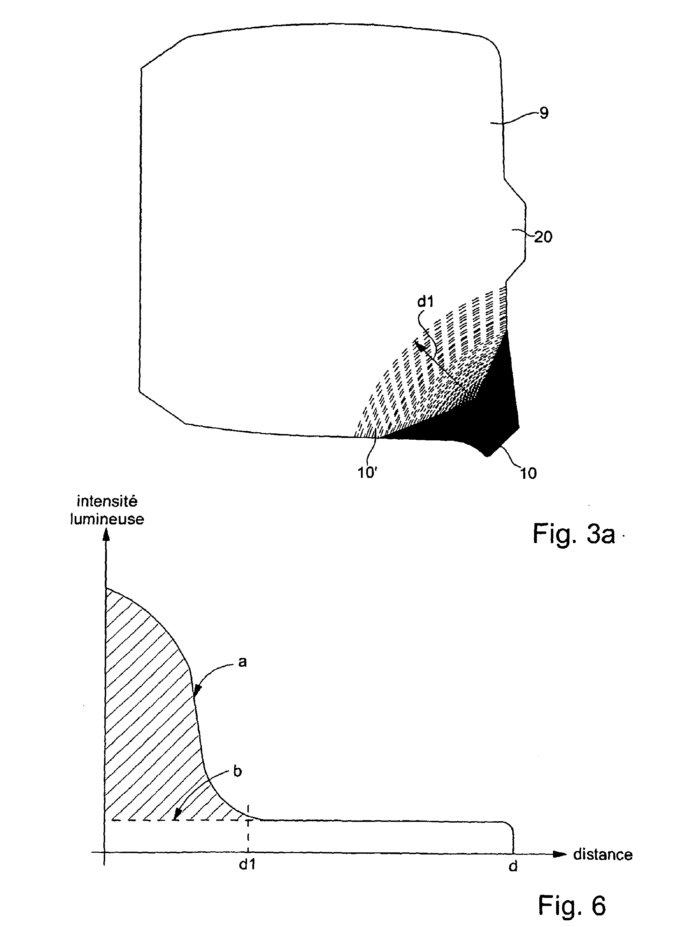

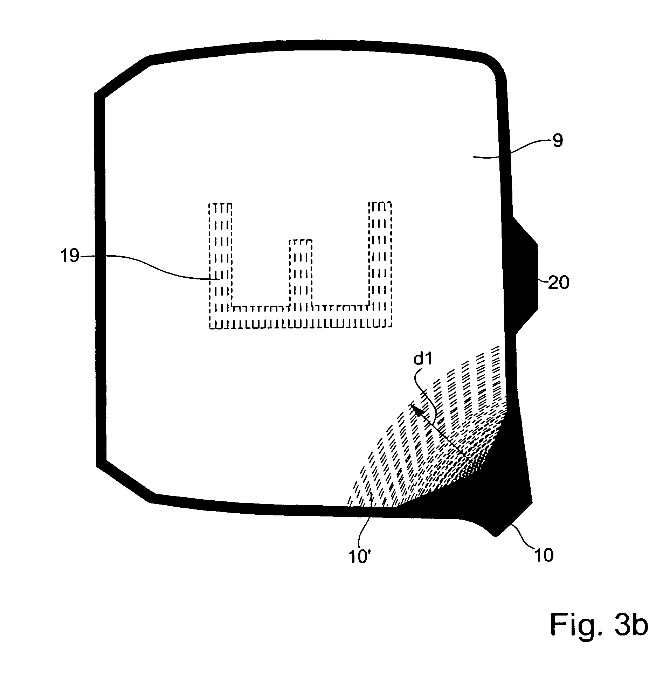

La zone à opacité partielle s'étend sur le film diffuseur 9 depuis une limite 25 qui représente une ligne de bordure de la partie visible de l'élément d'affichage jusqu'à une distance déterminée d1 de la source de lumière comme on peut mieux le voir en référence aux figures 3a et 3b. Cette distance d1 peut dépendre d'un angle de vision naturel de l'élément d'affichage qui n'est pas forcément perpendiculaire à l'élément d'affichage dans le cas d'une montre-bracelet.

Il est à noter que la partie visible de l'élément d'affichage est définie de préférence par un réhaut opaque de support du verre de montre non représenté, qui maintient l'élément d'affichage. Dans le cas où le réhaut et la carrure de la montre sont sensiblement transparents, il peut être nécessaire de prévoir une couche partiellement ou entièrement opaque 10, par exemple de couleur noire comme montré à la figure 3b, sur le film diffuseur 9 entourant la partie visible de l'élément d'affichage.

L'intensité lumineuse du halo, qui est provoqué par la source de lumière et est visible de l'extérieur de l'élément d'affichage, décroît de manière non linéaire depuis la limite 25 jusqu'à une distance d1 à partir de laquelle l'intensité de lumière est sensiblement uniforme. De ce fait, l'opacité de la zone doit donc décroître de manière non linéaire comme l'intensité lumineuse du halo depuis la limite 25 jusqu'à la distance d1 de la source de lumière afin d'assurer une illumination uniforme de tout l'élément d'affichage. L'opacité partielle de la zone peut être d'environ 80% depuis la limite 25 jusqu'à 0% à la distance d1.

A la figure 6, il est représenté de manière simplifiée l'intensité lumineuse à travers l'élément d'affichage en fonction de la distance par rapport à la position de la source de lumière. On constate que l'intensité lumineuse du halo décroît de manière non linéaire jusqu'à une distance d1 à partir de laquelle on peut considérer que l'intensité de la lumière est plus ou moins constante. Sans couche à zone à opacité partielle, l'intensité de lumière à travers l'élément d'affichage est représentée par la courbe a. Avec ladite couche, l'intensité de lumière est représentée uniforme par la courbe b atténuée par ladite zone à opacité comme montrée par la partie hachurée. De ce fait, l'opacité en chaque point de la zone doit correspondre au niveau de l'intensité représentée à la courbe a.

La zone à opacité partielle 10', montrée de manière simplifiée aux figures 1, 3a et 3b sur le film diffuseur 9, peut être obtenue par une teinture déposée ou intégrée dans le film flexible du diffuseur, ou par un offset. La teinture utilisée peut être un dégradé de couleur noire, argentée ou blanche. Cette teinture noire est par exemple de l'encre déposée par une machine d'impression. Dans le cas d'une couleur noire, la lumière passant à travers la zone à opacité partielle est partiellement absorbée donc perdue, alors qu'avec une couleur blanche, la lumière est partiellement réfléchie de manière diffuse et renvoyée dans la plaque guide de lumière pour réduire les pertes de photons utiles. Ces photons récupérés peuvent être aiguillés vers d'autres zones moins lumineuses de la plaque guide de lumière 7.

En lieu et place d'une teinture, la zone à opacité partielle 10' peut également être obtenue par un revêtement métallique semi-transparent d'épaisseur variable, ou par un revêtement métallique percé d'une multitude de trous de diamètre et espacement variables en fonction de la résolution de l'oeil humain, ou par un revêtement métallique constitué d'une multitude de points métalliques de diamètre et espacement variables, qui sont obtenus à travers un chablon percé de trous. Ce revêtement métallique peut être fait par un procédé de métallisation sous vide, et les trous du revêtement mince ou du chablon peuvent être percés par un faisceau laser ou un autre procédé photo-lithographique.

Comme montré à la figure 3b, il peut être prévu que le film diffuseur comprenne une autre zone à opacité partielle de manière à produire un motif particulier 19, par exemple au moins un caractère alphabétique, au moins un symbole ou une image en arrière plan de l'élément d'affichage. En fonction de la variation d'opacité de cette zone, une représentation d'une image monochrome peut être effectuée.

Bien entendu, la zone à opacité partielle peut être réalisée sur une autre couche que le film diffuseur. Cette zone peut être réalisée directement sur la face avant de la plaque guide de lumière, sur le film redresseur 11 ou sur la face arrière de l'élément d'affichage. Dans le cas d'une zone sur la plaque guide de lumière, il serait préférable d'opter pour une teinture de couleur blanche en dégradé depuis une limite correspondant à la ligne de bordure de la partie visible de l'élément d'affichage du côté de la source de lumière. Avec cette couleur blanche déposée directement sur la plaque guide de lumière, la lumière est partiellement réfléchie de manière diffuse et permet ainsi de récupérer des photons utiles comme expliqué ci-dessus.

Comme le dispositif de rétro-éclairage doit pouvoir être aisément manipulé dans des opérations de montage dans un boîtier d'une montre-bracelet, tous les éléments qui le composent doivent être assemblés au préalable. Pour ce faire en se reportant à la figure 1, l'entretoise en forme de cadre 12 comprend tout d'abord un premier rebord intérieur 13 ayant deux doigts flexibles 15 disposés sur des parois latérales du premier rebord 13. Le réflecteur 6 et la plaque guide de lumière 7 sont maintenus entre une face d'appui du premier rebord et les deux doigts flexibles 15.

L'entretoise comprend encore un second rebord intérieur 14 au-dessus du premier rebord 13 dans le cas où il est prévu de monter un film diffuseur 9 et/ou un film redresseur 11. Le film diffuseur 9 est tout d'abord placé en appui sur le second rebord et est maintenu grâce à une languette 20 insérée dans un logement 16 d'une paroi latérale du second rebord. Le film redresseur 11 est ensuite placé en appui sur le film diffuseur 9 et est maintenu comme pour le film diffuseur grâce à une languette 21 également insérée dans le logement 16. De cette façon, tous les élément de transmission ou réflexion de la lumière sont maintenus dans l'entretoise qui elle-même est assemblée à la plaque à circuit imprimé sur lequel est fixé la diode électroluminescente 2.

Le réflecteur 6, la plaque guide de lumière 7, le film diffuseur 9 et le film redresseur 11 ont chacun une surface supérieure ou égale à la surface de la partie visible de l'élément d'affichage.

On peut encore remarquer sur la figure 1, que le film diffuseur sur lequel la zone à opacité décroissante a été réalisée, comprend une partie du film diffuseur qui est placée sur le coin arrondi 8. Cette partie du film diffuseur est revêtue d'une couche 10 de couleur noire entièrement opaque qui s'étend jusqu'à la limite du début de la zone à opacité décroissante, comme montré également à la figure 3a.

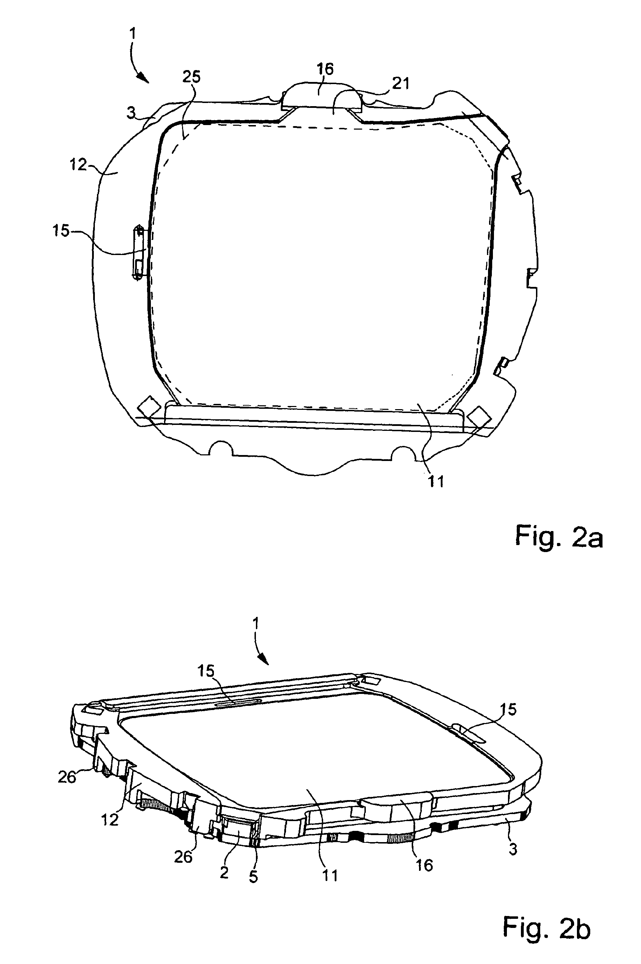

Pour mieux se rendre compte de la forme du dispositif de rétro-éclairage avec tous ces éléments assemblés, on peut se reporter aux figures 2a et 2b. On s'abstiendra de décrire tous les éléments composant ledit dispositif dans ces figures 2a et 2b étant donné qu'ils ont déjà été décrits ci-devant notamment en référence à la figure 1.

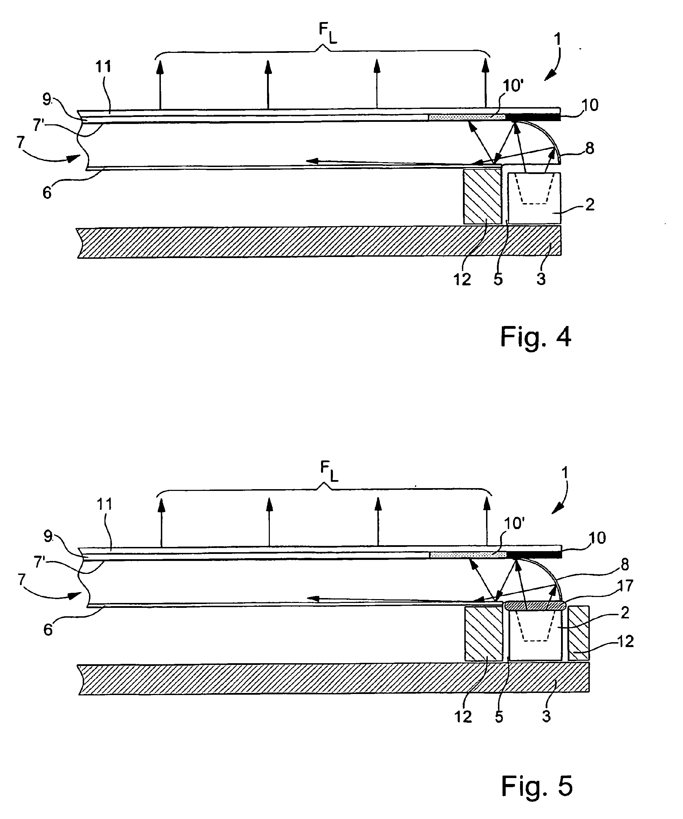

Deux variantes de réalisation du dispositif de rétro-éclairage sont encore expliqués en référence aux figures 4 et 5. Bien entendu, les mêmes éléments expliqués ci-dessus portent des signes de référence identiques, et ne seront expliqués que de manière simplifiée.

Le dispositif de rétro-éclairage montré partiellement en coupe comprend la plaque à circuit imprimé 3, la diode électroluminescente 2 fixée sur la plaque à circuit imprimé, l'entretoise 12 avec le compartiment 5 de la diode 2, le réflecteur 6, la plaque guide de lumière 7, le film diffuseur 9 et finalement le film redresseur 11.

Comme montré à la figure 4, la diode électroluminescente 2 est placée à courte distance de la face arrière de la plaque guide de lumière directement sous le coin arrondi. Un espace d'air sépare donc la face supérieure de la diode 2 du coin arrondi 8. Un bord du réflecteur 6 arrive à fleur d'un bord supérieur du compartiment. De préférence le bord du réflecteur pourrait être directement au bord de la sortie de lumière de la diode électroluminescente afin de ne pas perdre de la lumière réfléchie par le coin arrondi.

Grâce à la zone à opacité partielle 10' qui décroît plus la distance à la diode augmente, la lumière F_{L} redirigée et orientée par tous les éléments de transmission et réflexion de la lumière a une intensité sensiblement égale en tout point de manière à illuminer de manière homogène l'élément d'affichage.

Dans une variante de réalisation montrée à la figure 5, il est prévu un joint en matériau silicone 17 pour relier la partie supérieure de la diode électroluminescente 2 à une surface inférieure du coin arrondi de la plaque à circuit imprimé. De préférence, le joint a un indice de réfraction intermédiaire entre l'indice de réfraction du matériau transparent de la diode électroluminescente et l'indice de réfraction de la plaque guide de lumière.

Les parties de l'entretoise 12 qui définissent le compartiment 5, dans lequel la diode électroluminescente 2 est intégralement logée, peuvent définir une cage entièrement opaque. Ceci a pour but d'éviter d'avoir des effets de lumière parasites si la carrure de la montre est transparente.

Bien entendu, il aurait pu être imaginé également de placer la diode dans un même plan que la plaque guide de lumière afin qu'elle fournisse des rayons lumineux par une bordure de la plaque guide de lumière dans une direction horizontale. Dans ce cas, la plaque guide de lumière ne comprend plus de coin arrondi.

A partir de la description qui vient d'être faite de multiples variantes de réalisation du dispositif de rétro-éclairage peuvent être conçues par l'homme du métier sans sortir du cadre de l'invention définie par les revendications. Il peut être prévu une ou plusieurs autres zones à opacité partielle sur la couche dans le cas où il est souhaité atténuer volontairement l'intensité de lumière pour donner des effets particuliers à travers l'élément d'affichage. Ces autres zones peuvent être placées du côté de la face avant ou de la face arrière de la plaque guide de lumière. La ou les zones à opacité partielle peuvent être réalisées par une teinture de couleur claire. Il peut être prévu de n'utiliser pour le dispositif que le réflecteur avec la plaque guide de lumière sur laquelle une ou plusieurs zones à opacité partielle sont réalisées pour limiter les coûts de production. Le réflecteur et la plaque peuvent ne former qu'un seul élément.

## Revendications

1. Dispositif de rétro-éclairage (1) d'un élément d'affichage d'information d'un objet portable, tel qu'une montre-bracelet, le dispositif comprenant une plaque guide de lumière (7) ayant une face avant et une face arrière, un réflecteur de lumière (6) placé sur la face arrière de la plaque guide de lumière, une source de lumière visible (2) fournissant en bordure de la plaque guide de lumière des rayons lumineux, qui se propagent dans la plaque guide de lumière entre ses deux faces, et une couche placée du côté de la face avant de la plaque guide de lumière destinée à être en regard de l'élément d'affichage de l'objet portable, cette couche ayant au moins une zone (10') à opacité partielle décroissante à partir d'une limite (25) située à proximité de l'endroit de la bordure de la plaque guide de lumière recevant les rayons lumineux de la source de lumière, afin d'atténuer l'intensité de la lumière traversant ladite zone, **caractérisé en ce que** la zone à opacité partielle est obtenue par une teinture en dégradé de couleur blanche ou argentée, qui est déposée sur la couche ou intégrée dans la couche, ou par un revêtement métallique semi-transparent d'épaisseur variable, ou par un revêtement métallique percé d'une multitude de trous de diamètre et espacement variables qui sont de taille inférieure à la résolution de l'oeil humain, ou par un revêtement métallique constitué d'une multitude de points métalliques de diamètre et espacement variables de manière que des rayons lumineux soient partiellement réfléchis et renvoyés dans la plaque guide de lumière pour réduire les pertes de photons utiles.

2. Dispositif de rétro-éclairage (1) selon la revendication 1, **caractérisé en ce que** l'opacité partielle de la zone décroît de manière non linéaire à partir de la limite à proximité de la bordure de la plaque guide de lumière.

3. Dispositif de rétro-éclairage (1) selon la revendication 2, **caractérisé en ce que** la couche à zone à opacité partielle (10') fait partie intégrante de la face avant de la plaque guide de lumière (7) ou est utilisée comme un film polariseur pour l'élément d'affichage.

4. Dispositif de rétro-éclairage (1) selon la revendication 2, **caractérisé en ce que** la couche à zone à opacité partielle (10') est un film diffuseur (9) ou un film redresseur (11) de la lumière placé sur la face avant de la plaque guide de lumière.

5. Dispositif de rétro-éclairage (1) selon l'une des revendications précédentes, **caractérisé en ce qu**'il comprend une unique source de lumière, telle qu'une diode électroluminescente pour illuminer par l'arrière l'élément d'affichage.

6. Dispositif de rétro-éclairage (1) selon la revendication 4, **caractérisé en ce qu'**il comprend une entretoise (12) formant un cadre dans laquelle sont maintenus le réflecteur (6), la plaque guide de lumière et le diffuseur, et une plaque à circuit imprimé (3) sur laquelle est fixée la source de lumière, qui est une diode électroluminescente, et **en ce qu'**un compartiment (5) est pratiqué en périphérie de l'entretoise pour loger la diode électroluminescente (2), l'entretoise étant montée de manière amovible et positionnée par des moyens d'assemblage (26) sur la plaque à circuit imprimé.

7. Dispositif de rétro-éclairage (1) selon la revendication 6, **caractérisé en ce que** l'entretoise (12) comprend deux doigts flexibles (15) disposés sur des faces latérales d'un premier rebord intérieur (13) pour maintenir le réflecteur (6) et la plaque guide de lumière (7) insérés entre une face d'appui du premier rebord et chaque doigt flexible.

8. Dispositif de rétro-éclairage (1) selon la revendication 7, **caractérisé en ce que** l'entretoise comprend en dessus des doigts flexibles (15) un second rebord intérieur (14) pour recevoir un film diffuseur flexible (9), qui est maintenu à l'aide d'une languette (20) insérée dans un logement (16) pratiqué dans une face latérale du second rebord de l'entretoise, et **en ce qu'**un film flexible transparent redresseur de lumière (11) est placé sur le film diffuseur et maintenu par une autre languette (21) dans le logement (16) du second rebord.

9. Dispositif de rétro-éclairage (1) selon l'une des revendications précédentes, **caractérisé en ce que** la plaque guide de lumière (7) comprend à sa périphérie un coin arrondi (8) recouvert par une couche (8') de réflexion de la lumière, et une structure de prismes ou de lentilles (7') de taille micrométrique ou nano-métrique sur une partie de sa face avant ou arrière, et **en ce que** la source de lumière, telle que la diode électroluminescente (2), est disposée sous le coin arrondi afin de fournir des rayons lumineux dans une direction perpendiculaire à la face arrière de la plaque guide de lumière afin que lesdits rayons soient réfléchis par la couche de réflexion en bordure de la plaque guide de lumière, et se propagent dans la plaque guide de lumière entre les faces avant et arrière.

10. Dispositif de rétro-éclairage (1) selon la revendication 9, **caractérisé en ce qu**'une partie d'un film diffuseur (9) est placée sur le coin arrondi (8), en ce que la partie du film diffuseur est revêtue d'une couche (10) de couleur noire entièrement opaque qui s'étend jusqu'à la limite du début de la zone à opacité décroissante, et en ce que le coin arrondi est recouvert d'une couche de couleur blanche opaque ou d'un revêtement métallique.

11. Dispositif de rétro-éclairage (1) selon la revendication 6, **caractérisé en ce que** la diode électroluminescente (2) est logée dans le compartiment de l'entretoise, qui est composé de parois latérales entourant partiellement ou complètement ladite diode depuis une surface supérieure de la plaque à circuit imprimé (3), et **en ce qu'**un bord du réflecteur arrive à fleur d'un bord supérieur du compartiment.

12. Dispositif de rétro-éclairage (1) selon la revendication 6, **caractérisé en ce qu'**un joint en matériau silicone (17) relie la partie supérieure de la diode électroluminescente (2) à une surface inférieure du coin arrondi de la plaque à circuit imprimé, le joint ayant un indice de réfraction intermédiaire entre l'indice de réfraction du matériau transparent de la diode électroluminescente et l'indice de réfraction de la plaque guide de lumière (7).

13. Dispositif de rétro-éclairage (1) selon la revendication 1, **caractérisé en ce que** la plaque guide de lumière (7), le réflecteur (6) et la couche à zone à opacité partielle forment un seul élément.

14. Dispositif de rétro-éclairage (1) selon l'une des revendications précédentes, **caractérisé en ce qu**'il comprend une ou plusieurs autres zones à opacité partielle (19) sur la couche pour atténuer volontairement l'intensité de lumière à travers ces zones afin de produire un effet ou un motif particulier à travers l'élément d'affichage.

## Claims

1. Backlighting device (1) for an information display element of a portable object such as a wristwatch, said device comprising a light guide plate (7) having a front face and a rear face, a light reflector (6) located on the rear face of the light guide plate, a source of visible light (2) feeding light beams to a boundary or edge of the light guide plate, which spread in the light guide plate between its two faces, and a layer located from the side of the front face of the light guide plate intended to face a rear face of the display element of the portable object, said layer having at least one zone (10') with partial opacity decreasing from a limit (25) located close to the boundary area of the light guide plate, which receives the light beams of the light source, in order to attenuate the intensity of the light crossing said zone, **characterized in that** the zone with partial opacity is obtained by a shading white or silver dye applied to the layer or integrated into the layer, or by a semi-transparent metal covering of variable thickness, or by a metal covering pierced by a plurality of holes of varying diameter and spacing, which are smaller in size than the resolution of the human eye, or by a metal covering formed from a plurality of metal dots of varying diameter and spacing so that light beams are partially reflected and returned into the light guide plate to reduce the losses of useful photons.

2. Backlighting device (1) according to claim 1, **characterized in that** the partial opacity of the zone decreases non-linearly from the limit close to the edge of the light guide plate.

3. Backlighting device (1) according to claim 2, **characterized in that** the layer with the partially opaque zone (10') forms an integral part of the front face of the light guide plate (7) or is used like a polarising film for the display element.

4. Backlighting device (1) according to claim 2, **characterized in that** the layer with the partially opaque zone (10') is a light diffuser film (9) or a light rectifier film (11) located on the front face of the light guide plate.

5. Backlighting device (1) according to one of the preceding claims, **characterized in that** it comprises a single light source, such as a light emitting diode, to illuminate the display element from the back.

6. Backlighting device (1) according to claim 4, **characterized in that** it comprises a crosspiece (12) forming a frame, in which the reflector (6), the light guide plate and a diffuser are held, and a printed circuit board (3) on which is fixed the light source, which is a light emitting diode, and **in that** a compartment (5) is cut into the periphery of the crosspiece to house the light emitting diode (2), the crosspiece being detachably mounted and positioned by fitting means (26) on the printed circuit board.

7. Backlighting device (1) according to claim 6, **characterized in that** the crosspiece (12) comprises two flexible fingers (15) disposed on side faces of a first inside shoulder (13) to hold the reflector (6) and the light guide plate (7) inserted between a support face of the first shoulder and each flexible finger.

8. Backlighting device (1) according to claim 7, **characterized in that** above the flexible fingers (15), the crosspiece comprises a second inside shoulder (14) to receive a flexible diffuser film (9), which is held by means of a tab (20) inserted into a housing (16) cut into a side face of the second shoulder of the crosspiece, and **in that** a flexible transparent light rectifying film (11) is located on a diffuser film and held by another tab (21) in the housing (16) of the second shoulder.

9. Backlighting device (1) according to one of the preceding claims, **characterized in that** on its periphery, the light guide plate (7) has a rounded corner (8) covered by a light-reflecting layer (8') and an arrangement (7') of micro-prisms or lens of nanometre size on a section of its front or rear face, and **in that** the light source, such as a light emitting diode (2), is disposed below the rounded corner in order to feed the light beams in a direction perpendicular to the rear face of the light guide plate so that said beams are reflected by the reflecting layer at the edge of the light guide plate and spread into the light guide plate between the front and rear faces.

10. Backlighting device (1) according to claim 9, **characterized in that** a portion of a diffuser film (9) is located on the rounded corner (8), that the portion of the diffuser film is covered with a completely opaque black layer (10), which extends as far as the limit of the start of the zone with decreasing opacity, and **in that** the rounded corner is covered with an opaque white layer or with a metal covering.

11. Backlighting device (1) according to claim 6, **characterized in that** the light emitting diode (2) is housed in the compartment of the crosspiece comprising side walls, which partially or completely surround said diode from an upper surface of the printed circuit board (3), and **in that** an edge of the reflector comes to lie flush with an upper edge of the compartment.

12. Backlighting device (1) according to claim 6, **characterized in that** a joint of silicon material (17) joins the upper portion of the light emitting diode (2) to a lower surface of the rounded corner of the printed circuit board, said joint having an intermediate refractive index between the refractive index of the transparent material of the light emitting diode and the refractive index of the light guide plate (7).

13. Backlighting device (1) according to claim 1, **characterized in that** the light guide plate (7), the reflector (6) and the partially opaque zone form a single element.

14. Backlighting device (1) according to any of the preceding claims, **characterized in that** it includes one or more other zones with partial opacity (19) on the layer to attenuate voluntarily the light intensity through these other zones in order to produce a particular effect or pattern through the display element.

## Patentansprüche

1. Hintergrundbeleuchtungsvorrichtung (1) eines Informationsanzeigeelements eines tragbaren Gegenstands wie etwa einer Armbanduhr, wobei die Vorrichtung eine Lichtleiterplatte (7) mit einer Vorderseite und einer Rückseite, einen Lichtreflektor (6), der an der Rückseite der Lichtleiterplatte angeordnet ist, eine Quelle (2) für sichtbares Licht, die zu dem Rand der Lichtleiterplatte Lichtstrahlen liefert, die sich in der Lichtleiterplatte zwischen ihren beiden Flächen ausbreiten, und eine Schicht, die an der Vorderseite der Lichtleiterplatte angeordnet ist und sich gegenüber einem Anzeigeelement des tragbaren Gegenstands befinden soll, umfasst, wobei diese Schicht wenigstens eine Zone (10') mit abnehmender partieller Lichtundurchlässigkeit ausgehend von einer Grenze (25), die sich in der Umgebung desjenigen Ortes des Randes der Lichtleiterplatte befindet, der die Lichtstrahlen von der Lichtquelle empfängt, um die Stärke des durch die Zone verlaufenden Lichts zu dämpfen, **dadurch gekennzeichnet, dass** die Zone mit partieller Lichtundurchlässigkeit erhalten wird durch eine abgestufte Einfärbung mit weißer oder silbriger Farbe, die auf die Schicht aufgebracht oder in die Schicht integriert ist, oder durch einen halbdurchlässigen metallischen Überzug mit veränderlicher Dicke oder durch einen metallischen Überzug, der von mehreren Löchern mit unterschiedlichem Durchmesser und unterschiedlichem Abstand und mit einer Größe, die kleiner als die Auflösung des menschlichen Auges ist, oder durch einen metallischen Überzug, der aus einer Vielzahl von metallischen Punkten mit unterschiedlichem Durchmesser und unterschiedlichem Abstand gebildet ist, derart, dass die Lichtstrahlen zum Teil reflektiert und wieder in die Lichtleiterplatte geschickt werden, um die Verluste von Nutzphotonen zu verringern.

2. Hintergrundbeleuchtungsvorrichtung (1) nach Anspruch 1, **dadurch gekennzeichnet, dass** die partielle Lichtundurchlässigkeit der Zone ausgehend von der Grenze in der Umgebung des Randes der Lichtleiterplatte nichtlinear abnimmt.

3. Hintergrundbeleuchtungsvorrichtung (1) nach Anspruch 2, **dadurch gekennzeichnet, dass** die Schicht mit einer Zone (10') mit partieller Lichtundurchlässigkeit einen integrierenden Bestandteil der Vorderseite der Lichtleiterplatte (7) bildet oder als dünne Polarisatorschicht für das Anzeigeelement verwendet wird.

4. Hintergrundbeleuchtungsvorrichtung (1) nach Anspruch 2, **dadurch gekennzeichnet, dass** die Schicht mit einer Zone (10') mit partieller Lichtundurchlässigkeit eine dünne Diffusorschicht (9) oder eine dünne Lichtgleichrichterschicht (11), die auf der Vorderseite der Lichtleiterplatte angeordnet ist, ist.

5. Hintergrundbeleuchtungsvorrichtung (1) nach einem der vorhergehenden Ansprüche, **dadurch gekennzeichnet, dass** sie eine einzige Lichtquelle wie etwa eine Elektrolumineszenzdiode umfasst, um das Anzeigeelement von hinten zu beleuchten.

6. Hintergrundbeleuchtungsvorrichtung (1) nach Anspruch 4, **dadurch gekennzeichnet, dass** sie einen Abstandshalter (12), der einen Rahmen bildet, in dem der Reflektor (6), die Lichtleiterplatte und der Diffusor gehalten werden, und eine Platte (3) mit gedruckter Schaltung, auf der die Lichtquelle befestigt ist, die eine Elektrolumineszenzdiode ist, umfasst und dass am Umfang des Abstandshalters ein Fach (5) ausgebildet ist, um die Elektrolumineszenzdiode (2) unterzubringen, wobei der Abstandshalter durch Montagemittel (26) an der Platte mit gedruckter Schaltung lösbar angebracht und positioniert ist.

7. Hintergrundbeleuchtungsvorrichtung (1) nach Anspruch 6, **dadurch gekennzeichnet, dass** der Abstandshalter (12) zwei flexible Finger (15) umfasst, die an den Seitenflächen einer ersten Innenkante (13) angeordnet sind, um den Reflektor (6) und die Lichtleiterplatte (7) zu halten, die zwischen eine Abstützfläche der ersten Kante und jeden flexiblen Finger eingesetzt sind.

8. Hintergrundbeleuchtungsvorrichtung (1) nach Anspruch 7, **dadurch gekennzeichnet, dass** der Abstandshalter über den flexiblen Fingern (15) eine zweite Innenkante (14) umfasst, um eine flexible dünne Diffusionsschicht (9) aufzunehmen, die mit Hilfe einer Zunge (20) gehalten wird, die in einen in einer Seitenfläche der zweiten Kante des Abstandshalters ausgebildeten Aufnahmesitz (16) eingesetzt ist, und dass eine lichtdurchlässige, flexible Lichtgleichrichterschicht (11) auf der dünnen Diffusionsschicht angeordnet ist und durch eine weitere Zunge (21) in dem Aufnahmesitz (16) der zweiten Kante angeordnet ist.

9. Hintergrundbeleuchtungsvorrichtung (1) nach einem der vorhergehenden Ansprüche, **dadurch gekennzeichnet, dass** die Lichtleiterplatte (7) an ihrem Umfang eine abgerundete Ecke (8), die durch eine Lichtreflexionsschicht (8') abgedeckt ist, und ein Prismen- oder Linsenstruktur (7') mit einer Größe im Mikrometer- oder Nanometerbereich auf einem Teil ihrer Vorderseite oder ihrer Rückseite umfasst und dass die Lichtquelle wie etwa die Elektrolumineszenzdiode (2) unter der abgerundeten Ecke angeordnet ist, um Lichtstrahlen in einer Richtung senkrecht zur Rückseite der Lichtleiterplatte zu liefern, damit die Strahlen durch die Reflexionsschicht am Rand der Lichtleiterplatte reflektiert werden und sich in der Lichtleiterplatte zwischen der Vorderseite und der Rückseite ausbreiten.

10. Hintergrundbeleuchtungsvorrichtung (1) nach Anspruch 9, **dadurch gekennzeichnet, dass** ein Teil einer dünnen Diffusorschicht (9) auf der abgerundeten Ecke (8) angeordnet ist, dass der Teil der dünnen Diffusorschicht mit einer Schicht (10) aus schwarzer Farbe, die vollständig lichtundurchlässig ist und sich bis zu der Grenze des Beginns der Zone mit abnehmender Lichtundurchlässigkeit erstreckt, überzogen ist und dass die abgerundete Ecke mit einer lichtundurchlässigen Schicht aus weißer Farbe oder mit einem metallischen Überzug beschichtet ist.

11. Hintergrundbeleuchtungsvorrichtung (1) nach Anspruch 6, **dadurch gekennzeichnet, dass** die Elektrolumineszenzdiode (2) in dem Fach des Abstandshalters aufgenommen ist, das aus Seitenwänden gebildet ist, die die Diode ausgehend von einer oberen Oberfläche der Platte (3) mit gedruckter Schaltung teilweise oder vollständig umgeben ist, und dass ein Rand des Reflektors mit einem oberen Rand des Fachs bündig ist.

12. Hintergrundbeleuchtungsvorrichtung (1) nach Anspruch 6, **dadurch gekennzeichnet, dass** eine Dichtung (17) aus einem Silikonwerkstoff den oberen Teil der Elektrolumineszenzdiode (2) mit einer unteren Oberfläche der abgerundeten Ecke der Platte mit gedruckter Schaltung verbindet, wobei die Dichtung einen Brechungsindex im Bereich zwischen dem Brechungsindex des lichtdurchlässigen Materials der Elektrolumineszenzdiode und dem Brechungsindex der Lichtleiterplatte (7) besitzt.

13. Hintergrundbeleuchtungsvorrichtung (1) nach Anspruch 1, **dadurch gekennzeichnet, dass** die Lichtleiterplatte (7), der Reflektor (6) und die Schicht mit einer Zone mit partieller Lichtundurchlässigkeit ein einziges Element bilden.

14. Hintergrundbeleuchtungsvorrichtung (1) nach einem der vorhergehenden Ansprüche, **dadurch gekennzeichnet, dass** sie eine oder mehrere weitere Zonen (19) mit partieller Lichtundurchlässigkeit auf der Schicht aufweist, um die Stärke des Lichts durch diese Zonen beliebig zu dämpfen, um einen besonderen Effekt oder ein besonderes Muster durch das Anzeigeelement hindurch zu erzeugen.
